# EUROPEAN PATENT SPECIFICATION

(11) **EP 0 623 557 B1**
(45) Date of publication and mention of the grant of the patent: **21.05.1997**
(21) Application number: 94302967.8
(22) Date of filing: 25.04.1994
(51) Int. Cl.: C02F 1/28, B09B 3/00

(54) **Sequestration of hydrophobic organic materials in sediment**
Verfahren zur Sequestrierung von hydrophoben organischen Materialien in Sedimenten
Procédé pour la séquestration de matières organiques hydrophobes dans des sédiments

(30) Priority: 03.05.1993 US 56513
(43) Date of publication of application: 09.11.1994
(73) Proprietor: ROHM AND HAAS COMPANY, Philadelphia, Pennsylvania 19106-2399 (US)
(72) Inventor: Brendley, Jr. William Harry, Hatboro, Pennsylvania 19040 (US); Maroldo, Stephen Gerard, Harleysville, Pennsylvania 19438 (US); Huggett, Robert James, Seaford, Virginia 23696 (US)
(74) Representative: Tanner, James Percival

(56) References cited:
- US-A- 4 040 990
- US-A- 4 134 831

## Description

The present invention is concerned with sequestration of hydrophobic organic substances with carbonaceous adsorbents, and especially to sequestration of toxic, hydrophobic organic substances in surface-water sediments using carbonaceous adsorbents derived from porous synthetic polymers.

Discharge of pollutants into surface waters has created a long-lasting problem of toxicity for organisms that live in those waters and the higher organisms that feed on them, including human beings. Hydrophobic, organic pollutants tend to settle into the sediment at the bottom of these waters and remain there for long periods; they are not easily removed by natural water flow because of their hydrophobic nature and their location in the pore water of the sediment. As a result, sediment-dwelling organisms are exposed to these pollutants, absorb them into their systems, and pass them on to higher organisms that eat the bottom dwellers.

Of particular interest to regulatory authorities as sediment pollutants are polycyclic aromatic hydrocarbons such as naphthalene, acenaphthene, phenanthrene, anthracene and fluoranthene, and pesticides such as dieldrin and endrin. In addition to being toxic themselves, these pollutants serve as indicators of sediment pollution in general.

Methods for removing or adsorbing pollutants in sediments have heretofore focused on removal of the sediment by dredging, sequestering the polluted sediment *in situ* by capping it, as for example with clean sediment, or by treating the sediment with an adsorbent such as activated carbon. Dredging produces large volumes of contaminated mud which creates disposal problems, and capping poses the problem of assuring that the polluted sediment remains sequestered despite erosion or possible human activity affecting the bottom, and that the pollutants do not re-enter the water or clean sediment by diffusion or other processes. Carbon must first be brought into contact with the pollutants, and then be removed from the surface-water body to avoid a slow release of the pollutant from the carbon. Wide dispersal of the carbon facilitates contacting the pollutants, but complicates carbon removal, while containment of the carbon for easy removal interferes with its contact with the pollutants. Methods for removing adsorbent after it has adsorbed pollutants were disclosed by Dawson *et al.,* US-A-4,134,831; these include confining the adsorbent in magnetically attractable, porous bags, or adding magnetically attractable material, such as iron or magnetic iron oxides, to the adsorbent itself. In either case the adsorbent would be distributed over the sediment, and subsequently recovered by drawing a magnet over the sediment to collect the adsorbent or adsorbent packages. In either case a clear advantage would exist if the adsorbent could be left in contact with the sediment rather than having to expend the effort to recover it.

According to the present invention there is provided a process for sequestering hydrophobic organic materials in surface-water sediment contaminated with such organic materials, which comprises contacting the sediment with partially pyrolyzed, carbonaceous adsorbent particles having at least 85% by weight carbon and a carbon-to-hydrogen atom ratio of between about 1.5:1 and about 20:1, and allowing the sediment to remain in contact with the adsorbent particles.

Preferred adsorbents for use in the process of the present invention are those derived from porous synthetic polymers, and more preferred are those having a carbon-fixing moiety, for example, a carbon-fixing moiety which is one or more sulfonic acid groups or salts thereof.

In one embodiment, the adsorbent is made by partial pyrolysis of macroporous synthetic polymer particles in the presence of carbon-fixing moieties such as sulfonate groups.

The adsorbents useful in the process of the present invention may be prepared by methods known to those skilled in the art, such as that described in Neely, US-A-4,040,990, or Maroldo et al., US-A-4,839,331. These methods involve partial pyrolysis of synthetic copolymer particles until they have at least 85% by weight carbon and a carbon-to-hydrogen atom ratio of between about 1.5:1 and about 20:1. Preferred adsorbents are those made from macroporous copolymer particles containing mesopores and macropores ranging from about 50 to about 100,000 Angstroms in average critical dimension, and which themselves have a multimodal pore-size distribution and mesopores and macropores ranging from about 50 to about 100,000 Angstroms in average critical dimension.

The adsorbent may be brought into contact with the sediment by any convenient technique, including such relatively simple techniques as broadcasting it onto the surface of the water and allowing it to settle onto the sediment, where it adsorbs and sequesters the hydrophobic organic materials. The adsorbent may be allowed to remain in the sediment where natural agitation from movement of the surface water helps to bring it into contact with more of the organic materials. A particular advantage of the present invention over activated carbons and other adsorbents of the prior art is that the adsorbents of the invention adsorb the organic materials sufficiently well that they do not re-elute into the sediment. This eliminates the necessity of recovering the adsorbent after it has adsorbed the organic materials. In the adsorbed state, the organic materials are prevented from contacting the living organisms dwelling in, or in contact with, the sediment, thus preventing transfer of toxic materials into the food chain.

Other techniques for bringing the adsorbent into contact with the sediment may be advantageous in particular situations, as for example mechanically or hydraulically agitating the sediment and allowing it to settle with the adsorbents. Such mixing techniques may be particularly advantageous for such bodies of water as settling ponds, lakes and other, relatively still waters. In other situations it may be advantageous to simply allow the adsorbent particles to settle onto the sediment and form a protective layer through which any hydrophobic organic materials must pass before entering the surface water. In such a case it may be advantageous for subsequent sediment from the surface water to cover the layer of adsorbent and further reduce the likelihood of contact between the hydrophobic organic materials and organisms living in, or consuming, the surface water.

The term "surface water", as used herein, refers to those natural waters exposed at the earth's surface, such as streams, rivers, ponds, lakes, estuaries and bays, whether moving or still, and includes marine, brackish and fresh waters.

The materials which are intended to be adsorbed by the adsorbent are hydrophobic organic materials, and especially toxic organic materials such as polynuclear aromatic hydrocarbons and halogenated hydrocarbons. The levels of sediment contamination which may be advantageously treated using the process of the present invention are, for example, from about 10 nanograms to about 20 grams of hydrophobic organic material per kilogram (kg) of sediment, preferably from about 1 microgram to about 10 grams per kg, and more preferably from about 10 micrograms to about 3 grams per kg. The amount of adsorbent useful for sequestering the hydrophobic organic materials is, for example, from about 1 to about 200 g/kg of sediment, preferably from about 5 to about 100 g/kg of sediment, and more preferably from about 10 to about 50 g/kg of sediment. This treatment level is preferably based upon the estimated weight of sediment with which the adsorbent will come into contact.

Embodiments of the present invention will now be illustrated by way of the following Examples and accompanying drawings, in which:-
Figure 1 shows a gas chromatograph of a "control" sample from pore water separated from York River sediment containing no contaminated Elizabeth River sediment and containing no adsorbent.
Figure 2 shows a gas chromatograph of pore water separated from York River sediment containing no contaminated Elizabeth River sediment, but containing 2% by weight of Adsorbent C (described in Example 4, below);
Figure 3 shows a gas chromatograph of pore water separated from York River sediment containing no contaminated Elizabeth River sediment, but containing 2% by weight of Filtrasorb 400 activated charcoal;
Figure 4 shows a gas chromatograph of a "control" sample from pore water separated from York River sediment containing 3% contaminated Elizabeth River sediment but containing no adsorbent;
Figure 5 shows a gas chromatograph of pore water separated from York River sediment containing 3% contaminated Elizabeth River sediment, but containing 2% by weight of Adsorbent C;
Figure 6 shows a gas chromatograph of pore water separated from York River sediment containing 3% contaminated Elizabeth River sediment, but containing 2% by weight of Filtrasorb 400 activated charcoal;
Figure 7 shows a gas chromatograph of a "control" sample from pore water separated from York River sediment containing 10% contaminated Elizabeth River sediment but containing no adsorbent;
Figure 8 shows a gas chromatograph of pore water separated from York River sediment containing 10% contaminated Elizabeth River sediment, but containing 2% by weight of Adsorbent C;
Figure 9 shows a gas chromatograph of a "control" sample from pore water separated from York River sediment containing 30% contaminated Elizabeth River sediment but containing no adsorbent;
Figure 10 shows a gas chromatograph of pore water separated from York River sediment containing 30% contaminated Elizabeth River sediment, but containing 2% by weight of Adsorbent C;
Figure 11 shows a gas chromatograph of pore water separated from York River sediment containing 30% contaminated Elizabeth River sediment, but containing 2% by weight of Filtrasorb 400 activated charcoal;
Figure 12 shows a gas chromatograph of a "control" sample from pore water separated from 100% contaminated Elizabeth River sediment containing no adsorbent;
Figure 13 shows a gas chromatograph of pore water separated from 100% contaminated Elizabeth River sediment containing 2% by weight of Adsorbent C; and
Figure 14 shows a gas chromatograph of pore water separated from 100% contaminated Elizabeth River sediment containing 2% by weight of Filtrasorb 400 activated charcoal.

As may be seen from the following Examples, survival of various species of aquatic fauna, from arthropods to fish, is greatly enhanced by contacting contaminated sediment with the adsorbents of the present invention and allowing the adsorbents to remain in contact with the sediment in the presence of the aquatic fauna.

In the following Examples, and throughout the specification, all percentages and ratios are by weight unless otherwise specified, and all reagents used are of good commercial quality unless otherwise specified. The following Examples are intended to illustrate the invention, and not to limit it except as it is limited by the claims.

In the following Examples, the contaminated sediment was obtained from the Elizabeth River in southeastern Virginia, U.S.A., at a site heavily contaminated with polynuclear hydrocarbons, primarily weathered and fresh creosote. The levels of contamination in this sediment ranged as high as 15 g/kg of sediment, and were generally above 10 g/kg. Sediment from a "clean" area of the York River in eastern Virginia, U.S.A. was used as a diluent in those Examples where the Elizabeth River sediment was diluted. The sampling site on the York River was not known to be contaminated with anthropogenic hydrocarbons.

### EXAMPLE 1

This Example illustrates the sequestering effect of adsorbents according to the present invention upon polynuclear hydrocarbons, as evidenced by the increased survival of fish over sediment containing the polynuclear hydrocarbons.
The adsorbent used in this Example was a carbonaceous adsorbent according to the present invention prepared according to the procedure described in US-A-4,040,990 from a polysulfonated styrene-18.5% divinylbenzene macroporous copolymer having a particle size range of from 150 to 300 µm, which was partially pyrolyzed in a nitrogen atmosphere at 500°C for 20 minutes, followed by an additional partial pyrolysis in a nitrogen atmosphere at 800°C for 20 minutes. This adsorbent is designated Adsorbent A.

Sediment from the Elizabeth River was placed in six aquaria; in two aquaria the sediment was undiluted, in two the sediment was diluted with York River sediment to give sediment containing 30% Elizabeth River sediment and 70% York River Sediment, and in two the sediment was diluted with York River sediment to give sediment containing 10% Elizabeth River sediment and 90% York River sediment. The adsorbent was mixed into the sediment of one aquarium from each pair at a level of 2 g adsorbent per 100 g sediment. Filtered York River water was circulated through each aquarium. Ten mummichogs *(Fundulus heteroclitus)* were placed in each aquarium, fed daily, and observed for survival over a 3-week period. The results of this Example are shown in Table I, below; in the Table, "ER" indicates Elizabeth River. It should be noted that the fish over the 100% Elizabeth River sediment without adsorbent all died within 14 days, while the 15% survival of fish over the 100% Elizabeth River sediment in the presence of 2% adsorbent occurred at three weeks.

**Table I**

| Survival of Fish over Contaminated Sediment with and Without Adsorbent | | | |
|---|---|---|---|
| % ER Sediment | 10 | 30 | 100 |
| Without Adsorbent | 100% | 15% | 0% |
| With 2% Adsorbent A | 100% | 75% | 15% |

### EXAMPLE 2

This Example illustrates that prolonged exposure of adsorbents according to the present invention to sediments contaminated with polynuclear hydrocarbons results in continued adsorption, rather than re-elution, of the hydrocarbons, as evidenced by a greater survival of fish.

The aquaria of Example 1 were filled with water and held for 18 weeks with no fish present. At the end of this period, the circulation of filtered York River water was re-established. After one week of river-water flow, five mummichogs were placed in each aquarium, fed daily, and observed for survival over a 53-day period. At the end of this exposure period, the surviving fish were sacrificed and sectioned for histopathological examination.

The supernatant water was decanted from each aquarium, and the sediment was centrifuged at 10,000 G to separate pore water from the sediment. The separated pore water was extracted with dichloromethane, fractionated by size-exclusion chromatography and analyzed by high-resolution gas chromatography using a flame-ionization detector.

The results of the survival study are shown below in Table II. The sole surviving fish over the 100% Elizabeth River sediment had several types of liver lesions not present in any of the other experimental fish, but common in feral mummichogs from the site in the Elizabeth River where the contaminated sediments were obtained. The chromatographic determination of aromatic hydrocarbons in the pore water showed a significant decrease in the number and amount of the hydrocarbons where the adsorbent was mixed with the sediment.

**Table II**

| Survival of Fish over Contaminated Sediment with and Without Adsorbent | | | |
|---|---|---|---|
| % ER Sediment | 10 | 30 | 100 |
| Without Adsorbent | 100% | 100% | 20% |
| With 2% Adsorbent A | 100% | 100% | 100% |

### EXAMPLE 3

This Example illustrates the sequestering effect of adsorbents according to the present invention upon polynuclear hydrocarbons, as evidenced by the increased survival of both fish and oysters over sediment containing the polynuclear hydrocarbons.

The aquaria of Example 1 were re-established with fresh sediment collected from approximately the same sites, with the addition of a pair of aquaria containing only York River sediment, with no added Elizabeth River sediment. The adsorbent used was similar to that used in Examples 1 and 2, but had a particle size range of from 300 to 850 µm. This adsorbent is designated Adsorbent B.

Ten mummichogs were again added to each aquarium, fed daily and observed for survival, over a period of 19 days. During the first 12 days the fish over the sediment with Adsorbent B showed a clear survival advantage, although by the end of the 19-day test period this advantage was slight (20% and 10% survival for fish over 30% and 100% ER sediment with Adsorbent B, versus 10% and 0% survival for fish over the same concentration of ER sediment with no adsorbent). At the end of the 19-day period, the surviving mummichogs were removed from the aquaria, and unfiltered York River water was circulated through the aquaria. In each of the pair of aquaria containing the 100% Elizabeth River sediment, five oysters *(Crassostrea virginica)* were placed on inverted beakers above the sediment. After five days, tissue from the oysters from each aquarium was separately pooled, desiccated over anhydrous sodium sulfate and precipitated silica, and soxhlet extracted with dichloromethane for 24 hours. The extracts were fractionated and analyzed as described in Example 2 for the pore water. The tissue hydrocarbon concentration in the oysters exposed to Elizabeth River sediment without adsorbent was 8 µg/g, while the concentration in oysters exposed to Elizabeth River sediment with adsorbent was 5 µg/g.

### EXAMPLE 4

This Example illustrates the effectiveness of the present invention, compared with activated carbon, in removing aromatic hydrocarbons from the pore water of sediment.

The adsorbent, according to the present invention, used in this Example was a carbonaceous adsorbent prepared according to the procedure described in US-A-4,040,990 from a styrene-18.5% divinylbenzene macroporous copolymer having a particle size range of from 150 to 300 µm, partially pyrolyzed in the presence of oleum in a nitrogen atmosphere at 800°C. This adsorbent is designated Adsorbent C. The activated carbon used as a comparison was Filtrasorb 400, coal-based activated charcoal ("Filtrasorb" is a trademark).

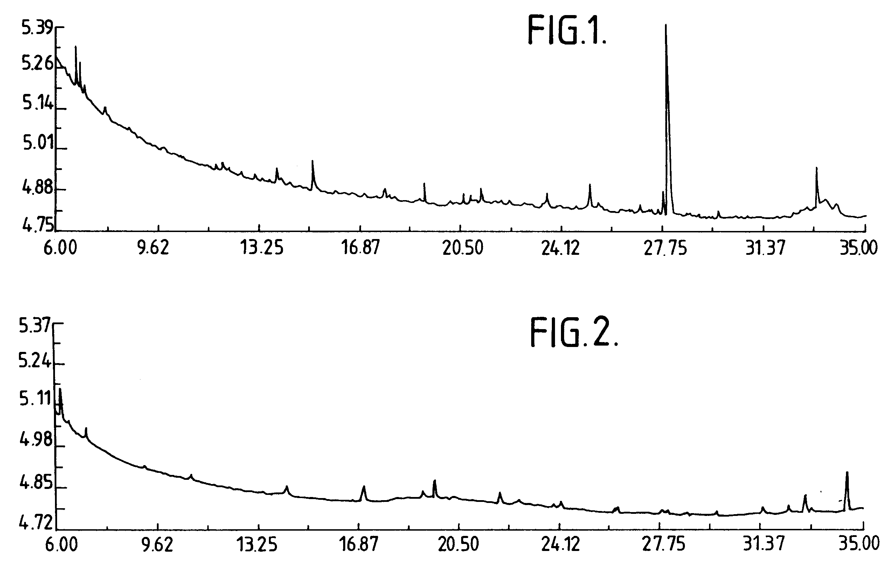

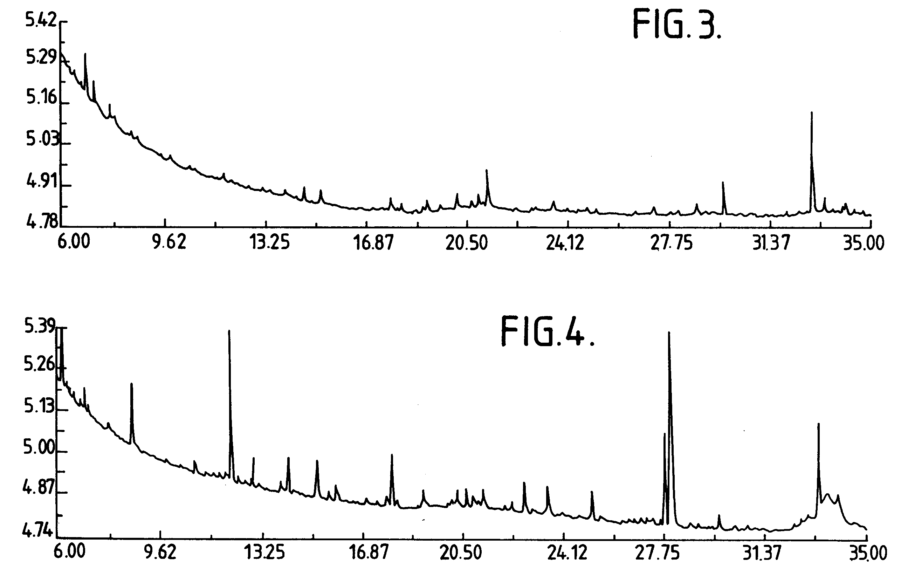

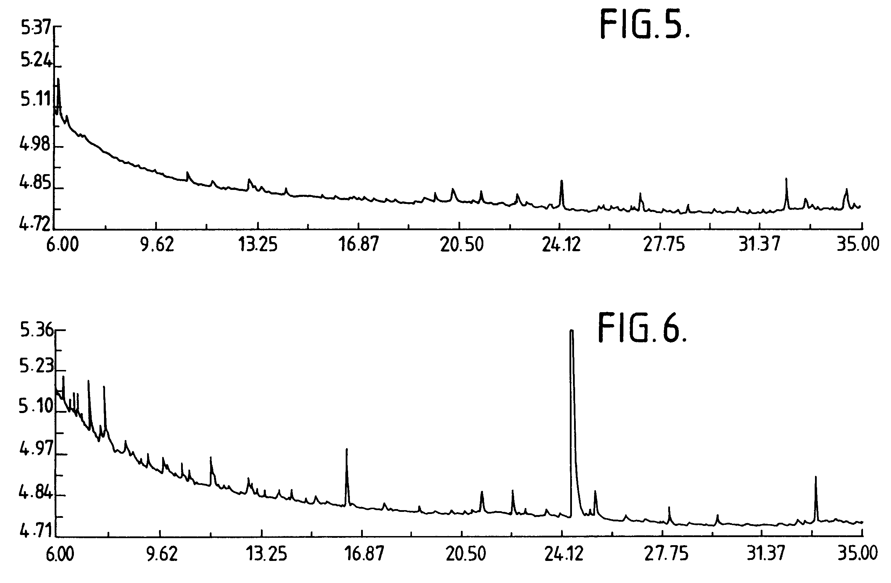

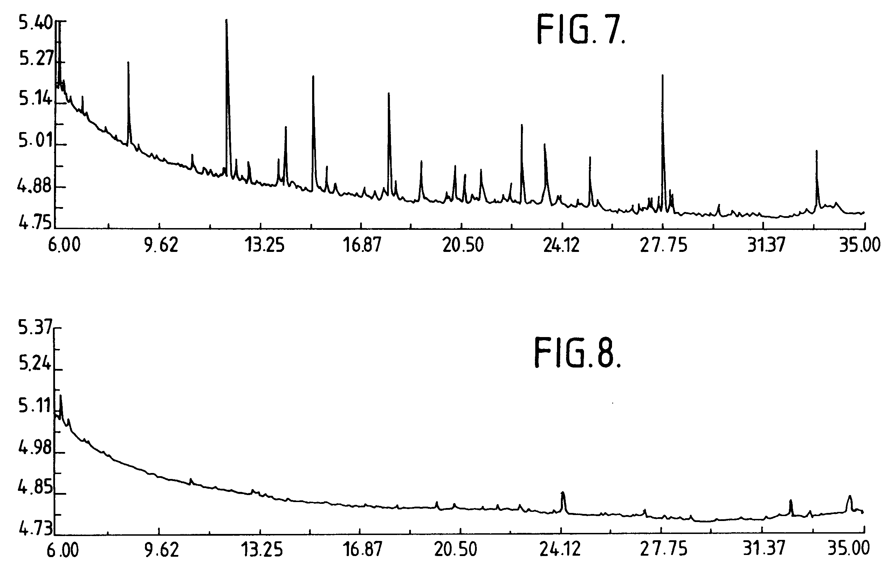

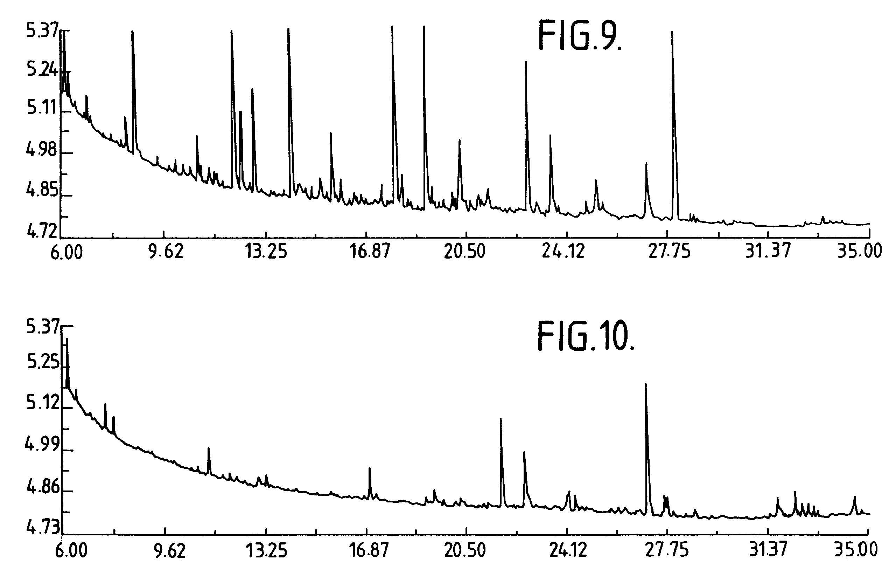

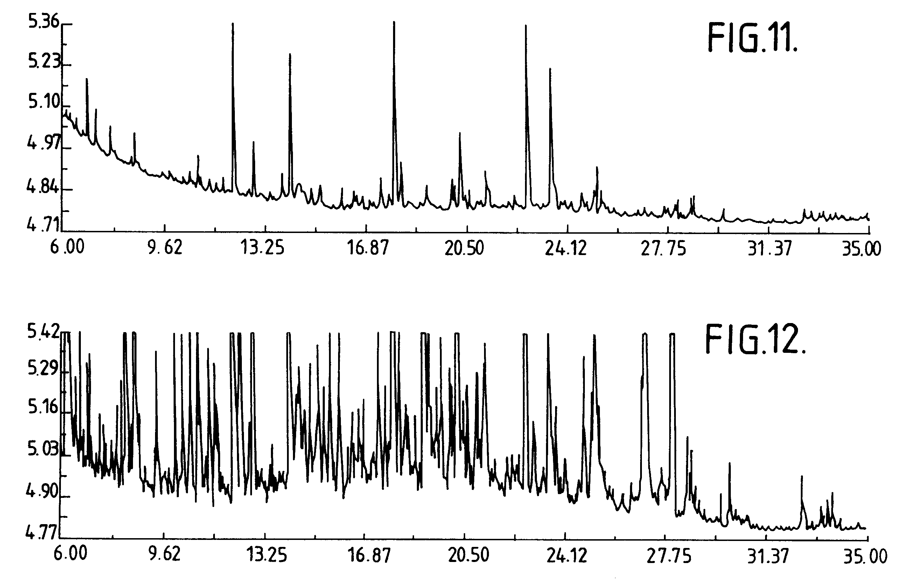

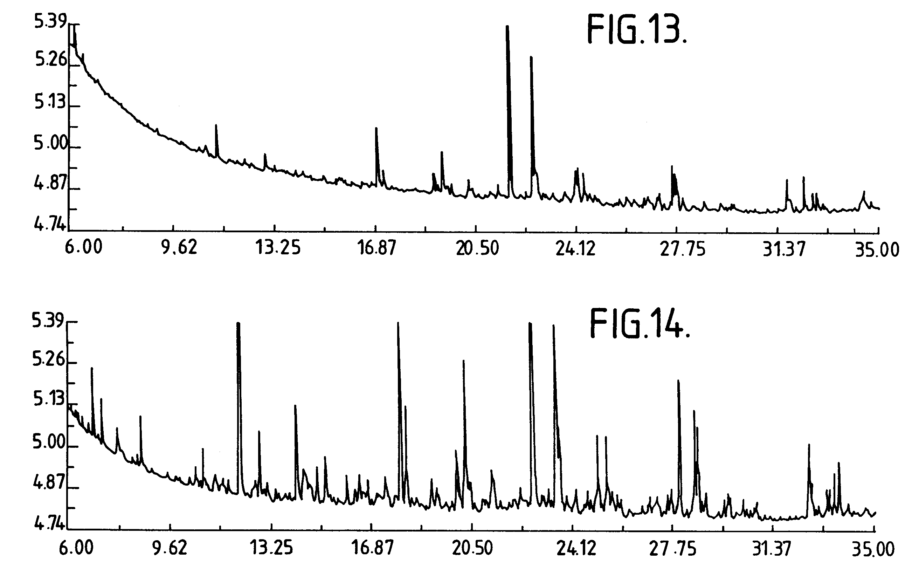

Samples of Elizabeth River sediment were mixed with York River sediment as described in Example 1 to produce mixed sediments containing 0%, 3%, 10%, 30% and 100% by weight of Elizabeth River sediment. The sediment samples were divided into two or three approximately equal portions as indicated by Figures 1 through 14. One portion of each sample was tested as follows with no added adsorbent (see Figures 1, 4, 7, 9 and 12), and the remaining portion(s) of each sample was/were tested as follows after mixing with approximately 2% by weight of the indicated adsorbent (see Figures 2, 3, 5, 6, 8, 10, 11, 13 and 14).

The samples were slurried with water and allowed to equilibrate overnight, and then were centrifuged at 12,000 G to separate the pore water from the sediment. The supernatant liquid from the centrifugation was analyzed by high-resolution gas chromatography using flame ionization detection, and the resulting chromatograms are shown in Figures 1 through 14. In each chromatogram the horizontal scale is in minutes, and the vertical scale is a relative detector response.

As may be seen from these chromatograms, the peaks which represent polynuclear aromatic hydrocarbons are significantly reduced where adsorbents are present, and they are reduced by a greater amount where the adsorbent used was a partially pyrolyzed carbonaceous adsorbent of the present invention than where the adsorbent used was an activated charcoal.

## Claims

1. A process for sequestering hydrophobic organic materials in surface-water sediment contaminated with such organic materials, which comprises contacting the sediment with partially pyrolyzed, carbonaceous adsorbent particles having at least 85% by weight carbon and a carbon-to-hydrogen atom ratio of between about 1.5:1 and about 20:1, and allowing the sediment to remain in contact with the adsorbent particles.

2. A process as claimed in claim 1, wherein the organic materials are present at from about 10 nanograms to about 20 grams per kilogram of sediment.

3. A process as claimed in claim 2, wherein the organic materials are present at from about 1 microgram to about 10 grams per kilogram of sediment.

4. A process as claimed in claim 3, wherein the organic materials are present at from about 10 microgram to about 3 grams per kilogram of sediment.

5. A process as claimed in any of claims 1 to 4, wherein the adsorbent particles are present at from about 1 gram to about 200 grams per kilogram of sediment.

6. A process as claimed in claim 5, wherein the adsorbent particles are present at from about 5 grams to about 100 grams per kilogram of sediment.

7. A process as claimed in claim 6, wherein the adsorbent particles are present at from about 10 gram to about 50 grams per kilogram of sediment.

8. Use of partially pyrolyzed, carbonaceous adsorbent particles having at least 85% by weight carbon and a carbon-to-hydrogen atom ratio of between about 1.5:1 and about 20:1 to sequester hydrophobic organic materials in surface-water sediment contaminated with such organic materials.

## Patentansprüche

1. Verfahren zur Sequestrierung von hydrophoben organischen Materialien in Oberflächenwasser-Sediment, welches mit derartigen organischen Materialien kontaminiert ist, welches das Kontaktieren des Sediments mit teilweise pyrolysierten, kohlenstoffhaltigen Adsorbensteilchen, welche mindestens 85 Gew.- % Kohlenstoff und ein Kohlenstoff-zu-Wasserstoff-Atomverhältnis von zwischen etwa 1,5:1 und etwa 20:1 aufweisen, und das Inkontaktbleiben des Sediments mit den Adsorbensteilchen umfaßt.

2. Verfahren nach Anspruch 1, wobei die organischen Materialien von etwa 10 Nanogramm bis etwa 20 Gramm pro Kilogramm des Sediments zugegen sind.

3. Verfahren nach Anspruch 2, wobei die organischen Materialien von etwa 1 Mikrogramm bis etwa 10 Gramm pro Kilogramm des Sediments zugegen sind.

4. Verfahren nach Anspruch 3, wobei die organischen Materialien von etwa 10 Mikrogramm bis etwa 3 Gramm pro Kilogramm des Sediments zugegen sind.

5. Verfahren nach einem der Ansprüche 1 bis 4, wobei die Adsorbensteilchen von etwa 1 Gramm bis etwa 200 Gramm pro Kilogramm des Sediments zugegen sind.

6. Verfahren nach Anspruch 5, wobei die Adsorbensteilchen von etwa 5 Gramm bis etwa 100 Gramm pro Kilogramm des Sediments zugegen sind.

7. Verfahren nach Anspruch 6, wobei die Adsorbensteilchen von etwa 10 Gramm bis etwa 50 Gramm pro Kilogramm des Sediments zugegen sind.

8. Verwendung von teilweise pyrolysierten, kohlenstoffhaltigen Adsorbensteilchen, welche mindestens 85 Gew.-% Kohlenstoff und ein Kohlenstoffzu-Wasserstoff-Atomverhältnis von zwischen etwa 1,5:1 und etwa 20:1 aufweisen, zum Sequestrieren von hydrophoben organischen Materialien in Oberflächenwasser-Sediment, welches mit derartigen organischen Materialien kontaminiert ist.

## Revendications

1. Procédé de séquestration de matières organiques hydrophobes dans des sédiments d'eaux de surface contaminés par ces matière organiques, ledit procédé comprenant la mise en contact des sédiments avec des particules adsorbantes carbonées partiellement pyrolysées ayant au moins 85 % en poids de carbone et un rapport des atomes de carbone aux atomes d'hydrogène d'environ 1,5:1 à environ 20:1, et le maintien les sédiments en contact avec les particules adsorbantes.

2. Procédé selon la revendication 1, dans lequel les matières organiques sont présentes à raison d'environ 10 nanogrammes à environ 20 grammes par kg de sédiments.

3. Procédé selon la revendication 2, dans lequel les matières organiques sont présentes à raison d'environ 1 microgramme à environ 10 grammes par kg de sédiments.

4. Procédé selon la revendication 3, dans lequel les matières organiques sont présentes à raison d'environ 10 microgrammes à environ 3 grammes par kg de sédiments.

5. Procédé selon l'une quelconque des revendications 1 à 4, dans lequel les particules adsorbantes sont présentes à raison d'environ 1 gramme à environ 200 grammes par kg de sédiments.

6. Procédé selon la revendication 5, dans lequel les particules adsorbantes sont présentes à raison d'environ 5 grammes à environ 100 grammes par kg de sédiments.

7. Procédé selon la revendication 6, dans lequel les particules adsorbantes sont présentes à raison d'environ 10 grammes à environ 50 grammes par kg de sédiments.

8. Utilisation de particules adsorbantes carbonées partiellement pyrolysées ayant au moins 85 % en poids de carbone et un rapport des atomes de carbone aux atomes d'hydrogène d'environ 1,5:1 à environ 20:1 pour séquestrer des matières organiques hydrophobes dans des sédiments d'eaux de surface contaminés par ces matières organiques.
